# EUROPÄISCHE PATENTSCHRIFT

(11) **EP 1 519 827 B1**
(45) Veröffentlichungstag und Bekanntmachung des Hinweises auf die Patenterteilung: **14.03.2007**
(21) Anmeldenummer: 03737883.3
(22) Anmeldetag: 15.05.2003
(51) Int. Cl.: B29C 53/82, B29C 53/66, B29C 47/00, B29C 47/02, B29C 47/92

(54) **VERFAHREN UND EINRICHTUNG ZUR HERSTELLUNG VON FESTIGKEITSTRÄGERVERSTÄRKTEN SCHLAUCHFÖRMIGEN GEBILDEN**
METHOD AND DEVICE FOR THE PRODUCTION OF TUBULAR STRUCTURES THAT ARE REINFORCED WITH A STRENGTHENING SUPPORT
PROCEDE ET DISPOSITIF POUR PRODUIRE DES STRUCTURES SOUS FORME DE TUYAUX FLEXIBLES RENFORCEES PAR UN ELEMENT DE CONSOLIDATION

(30) Priorität: 28.06.2002 DE 10229082
(43) Veröffentlichungstag der Anmeldung: 06.04.2005
(73) Patentinhaber: ContiTech Luftfedersysteme GmbH, 30165 Hannover (DE)
(72) Erfinder: BERGER, Markus, 31319 Sehnde (DE); OEHL, Rainer, 30938 Grossburgwedel (DE); BINDER, Klaus, 31157 Sarstedt (DE)
(74) Vertreter: Finger, Karsten
(86) Internationale Anmeldenummer: PCT/DE2003/001562
(87) Internationale Veröffentlichungsnummer: WO 2004/002720

(56) Entgegenhaltungen:
- DE-A- 2 545 058
- US-A- 4 324 607
- US-A- 4 710 255
- US-A- 4 954 194
- US-A- 5 335 167

## Beschreibung

Die Erfindung betrifft ein Verfahren zur Herstellung von festigkeitsträgerverstärkten, schlauchförmigen Gebilden mit den Schritten:
a) Aufbringen einer ersten Kautschukschicht mit einer ersten Extrusionseinheit auf eine Reihe aufeinanderfolgender miteinander gekoppelter starrer zylindrischer Dorne, die mit einer Vorschubgeschwindigkeit in Richtung einer Vorschubachse vorgetrieben werden;
b) Aufbringen einer ersten Fadenlage mit definierten Soll-Fadenwinkeln bezogen auf die Vorschubachse mit einer Spulengattereinheit, die um die vorgetriebenen Dorne rotierende Mittel hat;
c) Aufbringen mindestens einer weiteren Kautschukschicht mit mindestens einer weiteren Extrusionseinheit auf die erste Fadenlage.

Die Erfindung betrifft ferner eine Einrichtung zur Herstellung von festigkeitsträgerverstärkten, schlauchförmigen Gebilden mit:
a) einer ersten Extrusionseinheit zum Aufbringen einer ersten Kautschukschicht auf eine Reihe aufeinanderfolgender, miteinander gekoppelter starrer, zylinderförmiger Dorne, die mit einer Vorschubgeschwindigkeit in Richtung einer Vorschubachse vorgetrieben werden;
b) einer ersten Spulengattereinheit, die um die vorgetriebenen Dorne rotierende Mittel hat, zum Aufbringen einer ersten Fadenlage mit definierten Soll-Fadenwinkeln bezogen auf die Vorschubachse,
c) mindestens einer weiteren Extrusionseinheit zum Aufbringen mindestens einer weiteren Kautschukschicht auf die erste Fadenlage.

Aus der DE 27 50 642 C2 ist ein automatisiertes Verfahren zur Herstellung von mehrlagigen Rohren bekannt, bei dem Kautschuk- und Festigkeitsträgerschichten auf einen ortsfest gelagerten rotierenden Dorn aufgewickelt werden. Eine Materialzufuhreinheit wird hierbei in Längsrichtung entlang des Dorns bewegt. Nachteilig ist, dass dieses Herstellungsverfahren nicht kontinuierlich, sondern auf die Länge des Dorns begrenzt ist. Zudem kann die Dicke und der Winkel der aufgewickelten Kautschuk- und Festigkeitsträgerschichten nicht mit der für Schlauchrollbälge zum Einsatz in Luftfedern von Kraftfahrzeugen erforderlichen ausreichenden Genauigkeit sichergestellt werden.

In der DE 1 180 513 ist ein Wickelverfahren zur kontinuierlichen Herstellung von festigkeitsträgerverstärkten Schlauchrollbälgen für Luftfedern beschrieben, bei dem Kautschuk- und Festigkeitsträgerschichten auf endlos hinteinander gereihte und in eine Förderrichtung vorgetriebene Reihe von Dornen aufgewickelt werden. Der Schlauchrollbalg wird auf den Dornen vulkanisiert. Anschließend werden die Dornteilstücke abgezogen und an das Ende des in die Wickelmaschine einlaufenden Dornteilstücks lösbar angehängt. Die für Luftfederbälge erforderliche Präzision kann nachteilig bei dem Wickelverfahren nicht gewährleistet werden. Zudem werden die Dorne bei dem Vulkanisieren thermisch belastet und es besteht die Gefahr, dass die Dorne sich verformen, so dass eine gleichbleibende Qualität der Schlauchrollbälge nicht mehr gewährleistet werden kann.

In der DE 25 45 058 ist ein Verfahren und eine Vorrichtung zum Herstellen von gekrümmten Kautschukschläuchen beschrieben, bei dem mit mindestens einem Extruder und einer Fadenarmierungsmaschine Kautschuk- und Festigkeitsträgerschichten auf kontinuierlich in Förderrichtung vorgetriebene Dorne aufgebracht werden. Die Dorne stoßen hierbei unmittelbar nahtlos aneinander. In einer Schneideinrichtung wird der Endlosschlauch abgelängt, von den Dornen abgezogen und die vereinzelten Dorne an den Fertigungsanfang zurück verbracht.

Die DE 25 45 058 offenbart ein Verfahren gemäß dem Oberbegriff des Anspruchs 1 und eine Einrichtung gemäß dem Oberbegriff des Anspruchs 20.

Durch die Verwendung flexibler Dorne kann die für Luftfedern erforderliche Genauigkeit der festigkeitsträgerverstärkten, schlauchförmigen Gebilde nicht gewährleistet werden. Zudem besteht bei der Vulkanisation der schlauchförmigen Gebilde auf dem Dorn die Gefahr, dass sich die Dorne verziehen.

Für Schlauchrollbälge zur Verwendung als Luftfedern ist eine hochgenaue Fertigung wesentlich. Dabei ist insbesondere die Dicke der ersten Kautschuklage und der Fadenwinkel der Festigkeitsträgerschichten ein entscheidendes Qualitätsmerkmal, das die Eigenschaften der aus dem Schlauchrollbalg gefertigten Luftfeder und die Lebensdauer wesentlich mitbestimmt.

Aufgabe der Erfindung war es daher, eine verbesserte Einrichtung und ein Verfahren zur kontinuierlichen Herstellung von festigkeitsträgerverstärkten, schlauchförmigen Gebilden zu schaffen, die eine für den Einsatz beispielsweise in Luftfedern ausreichende Präzision und eine hohe Prozeßsicherheit gewährleisten.

Die Aufgabe wird mit dem gattungsgemäßen Verfahren gelöst durch die Schritte:
d) kontinuierliches Messen der Vortriebsgeschwindigkeit der Dorne;
e) Regeln der durch die erste Extrusionseinheit aufgebrachten Kautschukmenge in Abhängigkeit von der gemessenen Vorschubgeschwindigkeit, um eine definierte Soll-Dicke der ersten Kautschukschicht zu erhalten;
f) Regeln der Drehzahl der ersten Spulengattereinheit bei der Rotation um die Dorne in Abhängigkeit von der Vorschubgeschwindigkeit, um eine Fadenlage mit den definierten Soll-Fadenwinkeln zu erhalten.

Erfindungsgemäß bilden die erste Spulengattereinheit und die erste Extrusionseinheit einen in sich geschlossenen Regelkreis. Dabei wird die erste Extrusionseinheit in Abhängigkeit von der gemessenen Vorschubgeschwindigkeit der Dorne nachgeregelt, um eine gewünschte Soll-Dicke zu erhalten. Zudem wird die erste Fadenlage mit der ersten Spulengattereinheit in Abhängigkeit von der jeweiligen Vorschubgeschwindigkeit aufgebracht, so dass bei Variation der Vorschubgeschwindigkeit die Fadenwinkel konstant gehalten werden. Bei der Regelung der Extrusionseinheit und der Spulengattereinheit in Abhängigkeit von der Vorschubgeschwindigkeit wird die Erkenntnis genutzt, dass die extrudierte Kautschukschichtdicke und der Fadenwinkel im Wesentlichen durch die Vorschubgeschwindigkeit beeinflusst werden.

Es hat sich herausgestellt, dass mit einem solchen Regelkreis festigkeitsträgerverstärkte, schlauchförmige Gebilde mit einer hohen Prozeßsicherheit und annähernd gleichbleibender Qualität hergestellt werden können.

Die Aufgabe wird weiterhin durch die gattungsgemäße Einrichtung gelöst, die erfindungsgemäß folgende Merkmale hat:
d) Vortriebsgeschwindigkeits-Messmittel zum kontinuierlichen Messen der Vortriebsgeschwindigkeit der Dorne,
e) mindestens eine Steuer- und Regelungseinheit zum Ansteuern der Extrusionseinheiten und der Spulengattereinheiten, wobei die Steuer- und Regeleinheit zum
   - Regeln der Drehzahl der ersten Spulengattereinheit bei der Rotation um die Dorne in Abhängigkeit von der Vorschubgeschwindigkeit, um eine Fadenlage mit den definierten Soll-Fadenwinkeln zu erhalten,
   - Regeln der durch die ersten Extrusionseinheit aufgebrachten Kautschukmenge in Abhängigkeit von der gemessenen Vorschubgeschwindigkeit, um eine definierte Soll-Dicke der ersten Kautschukschicht zu erhalten. ausgebildet ist.

Es ist vorteilhaft, die Dorn-Vorschubgeschwindigkeit nach der gemessenen Vorschubgeschwindigkeit der Dorne zu regeln. Weiterhin kann die Regelung der aufgebrachten Kautschukmengen in Abhängigkeit von der gemessenen mittleren Wanddicke der jeweiligen Kautschukschicht erfolgen, die vorzugsweise an vier Stellen auf dem Umfang des Dorns kontinuierlich gemessen wird.

Die Genauigkeit der aufgebrachten Fadenlagen kann weiterhin gesteigert werden durch fortlaufendes Messen der Dicke der ersten Kautschukschicht und Regeln der durch die erste Extrusionseinheit aufgebrachten Kautschukmenge in Abhängigkeit von der gemessenen Dicke.

Weiterhin kann die Präzision der Fadenlagen durch Regeln der Drehzahl des Spulengatters der ersten Spulengattereinheit im Schritt f) in Abhängigkeit von der gemessenen Dicke der ersten Kautschukschicht erhöht werden.

Zur Herstellung eines mehrlagigen festigkeitsträgerverstärkten, schlauchförmigen Gebildes erfolgt vorteilhafter Weise weiterhin ein Regeln der durch die weiteren Extrusionseinheiten aufgebrachten Kautschukmengen in Abhängigkeit von der Vorschubgeschwindigkeit, um eine definierte Soll-Dicke der weiteren Kautschukschichten zu erhalten.

Weiterhin erfolgt vorzugsweise ein Aufbringen mindestens einer weiteren Fadenlage auf eine jeweilige Kautschukschicht mit definierten Soll-Fadenwinkeln bezogen auf die Vorschubachse jeweils mit einer weiteren Spulengattereinheit, die um die vorgetriebenen Dorne rotierende Mittel hat, sowie ein Aufbringen mindestens einer weiteren Kautschukschicht auf jeweils eine Fadenlage mit jeweils einer Extrusionseinheit. Dabei werden die Drehzahlen der Spulengattereinheiten bei der Rotation um die Dorne in Abhängigkeit von der Vorschubgeschwindigkeit oder von der Drehzahl der ersten Spulengattereinheit geregelt. Weiterhin werden die Drehzahlen der Spulengatter der weiteren Spulengattereinheiten in Abhängigkeit von einer Soll-Dicke der weiteren Kautschukschichten und der Soll-Fadenwinkel gesteuert. Dabei sind die Spulengatter über eine Totzeit und Koppelfaktoren miteinander gekoppelt. Dieses Regel- und Steuerkonzept hat sich für den kontinuierlichen Fertigungsbetrieb als geeignet erwiesen, um eine gleichbleibende Qualität der festigkeitsträgerverstärkten, schlauchförmigen Gebilde sicherzustellen.

Zur Herstellung von festigkeitsverstärkten, schlauchförmigen Gebilden, insbesondere von Luftfedern mit unterschiedlichen Fadenwinkel in definierten Bereichen ist es vorteilhaft, die Fadenwinkel durch Steuerung der Drehzahlen der Spulengattereinheiten variabel einzustellen. Hierzu sind die Spulengattereinheiten über eine Totzeit und Koppelfaktoren derart miteinander gekoppelt, dass eine Änderung des Fadenwinkels einer Fadenlage durch eine Spulengattereinheit an einer Position des festigkeitsverstärkten, schlauchförmigen Gebildes mit einer entsprechenden Änderung des Fadenwinkels weiterer Fadenlagen an derselben Position durch weitere Spulengattereinheiten gekoppelt ist. Mit den Spulengattereinheiten kann somit die Drehzahl so gesteuert werden, dass definierte Bereiche mit einem ersten Fadenwinkel und definierte Bereiche mit einem zweiten Fadenwinkel entstehen. Der Übergang von dem ersten Fadenwinkel auf den zweiten Fadenwinkel kann über eine definierte Beschleunigung und Verzögerung der Spulengattereinheiten genau festgelegt werden. Die Steuerung der Spulengattereinheiten ist hierbei so konzipiert, dass nachfolgende Spulengattereinheiten eine Drehzahländerung genau an der Stelle nachvollziehen, wie eine erste Spulengattereinheit, jedoch nur zeitlich verzögert in Abhängigkeit von der Dorn-Vorschubgeschwindigkeit.

Besonders vorteilhaft ist es, wenn zudem die durch die Extrusionseinheiten jeweils aufgebrachten Gummimengen in Abhängigkeit von dem jeweiligen Druck im Spritzkopf der entsprechenden Extrusionseinheit geregelt wird.

Es hat sich weiterhin als vorteilhaft herausgestellt, eine volumenabhängige Regelung der Dicke der aufgebrachten Kautschukschichten mittels einer Zahnradpumpe vorzusehen, die jeweils zwischen dem Extruder und dem Extrusionskopf einer Extrusionseinheit angeordnet ist. Damit kann der Volumenstrom der Kautschukmenge sehr genau geregelt werden, um eine konstante Schichtdicke zu erzielen.

Die Dicken der aufgetragenen Schichten werden vorteilhafter Weise an mehreren Positionen am Umfang des festigkeitsträgerverstärkten, schlauchförmigen Gebildes gemessen und eine Schichtdicke des Gebildes bevorzugt aus dem Mittelwert der am Umfang gemessenen Schichtdicken zur Regelung und/oder Fehlererkennung bestimmt. Damit wird vermieden, dass örtliche Variationen der Schichtdicken am Umfang zu einer fehlerhaften Nachregelung führen.

Die Messung der Schichtdicken am Umfang des Gebildes erfolgt vorzugsweise durch Rotation einer Einrichtung zum Messen der Dicken der aufgetragenen Schichten über die Zeit um den Umfang des festigkeitsträgerverstärkten, schlauchförmigen Gebildes und durch Aufnehmen der Dicke an mehreren Umfangspositionen.

Zur Dickenmessung können die Außenkanten des Gebildes berührungslos, beispielsweise optisch, vermessen werden. Zudem werden die Außenkanten des Dorns ebenfalls berührungslos, beispielsweise induktiv, vermessen. Aus den Außenkanten des Gebildes und des Dorns kann die Dicke des festigkeitsträgerverstärkten, schlauchförmigen Gebildes an verschiedenen Positionen am Umfang berechnet werden. Hierzu sollten die optischen Messeinheiten zur Vermessung der Außenkanten des Gebildes und der berührungslose Messsensor zur Erfassung der Dornaußenkante aufeinander ausgerichtet sein und einen gemeinsamen Bezugspunkt haben.

Um ein Abstrippen der Gebilde von den Dornen zu erleichtern, wird vorzugsweise Trennmittel auf die Dorne mit einer Trennmittel-Auftragseinheit vor dem Aufbringen der ersten Kautschukschicht aufgetragen. Die aufgetragene Trennmittelmenge wird dabei vorzugsweise in Abhängigkeit von der Vorschubgeschwindigkeit der Dorne geregelt, so dass ein gleichbleibender Trennmittelauftrag gewährleistet wird. Auf entsprechende Weise sollte vorzugsweise auch Trennmittel auf die letzte äußerste Kautschukschicht aufgebracht werden, um die Klebrigkeit herabzusetzen.

Um eine ausreichende Prozeßsicherheit zu gewährleisten, werden weiterhin Prozeßgrößen bei dem Aufbringen der Kautschuk- und Festigkeitsträgerschichten gemessen und fehlerhafte Bereiche des Gebildes markiert, wenn die Prozeßgrößen ein jeweiliges Fehlertoleranzmaß über- oder unterschreiten. Die markierten fehlerhaften Bereiche werden anschließend optisch erkannt und die als fehlerhaft erkannten Abschnitte des festigkeitsträgerverstärkten, schlauchförmigen Gebildes ausgesondert.

Weiterhin erfolgt vorteilhafterweise eine Kennzeichnung von Abschnitten des Gebildes nach dem Aufbringen der obersten Kautschukschicht mit einer Produktkennzeichnung, insbesondere mit der Produktionszeit und/oder einer Chargennummer. Die Kennzeichnung der Gebilde am Ende der Fertigungslinie sollte derart erfolgen, dass die Bereiche der Winkeländerung immer an der gleichen Stelle im Fertigprodukt liegen. Die Produktkennzeichnung sollte somit anzeichnen, wo der Rohling, d. h. das Gebilde, zu schneiden ist und eine Markierung aufbringen, die Auskunft über die Einbaulage oder Einbaurichtung gibt.

Die Erfindung wird nachfolgend anhand der beigefügten Zeichnungen näher erläutert. Es zeigen:
- Figur 1 -: schematisches Blockdiagramm einer Fertigungseinrichtung zur kontinuierlichen Herstellung von festigkeitsträgerverstärkten, schlauchförmigen Gebilden;
- Figur 2 -: Querschnitts-Blockdiagramm einer Einrichtung zur Messung der ersten Kautschukschichtdicke.

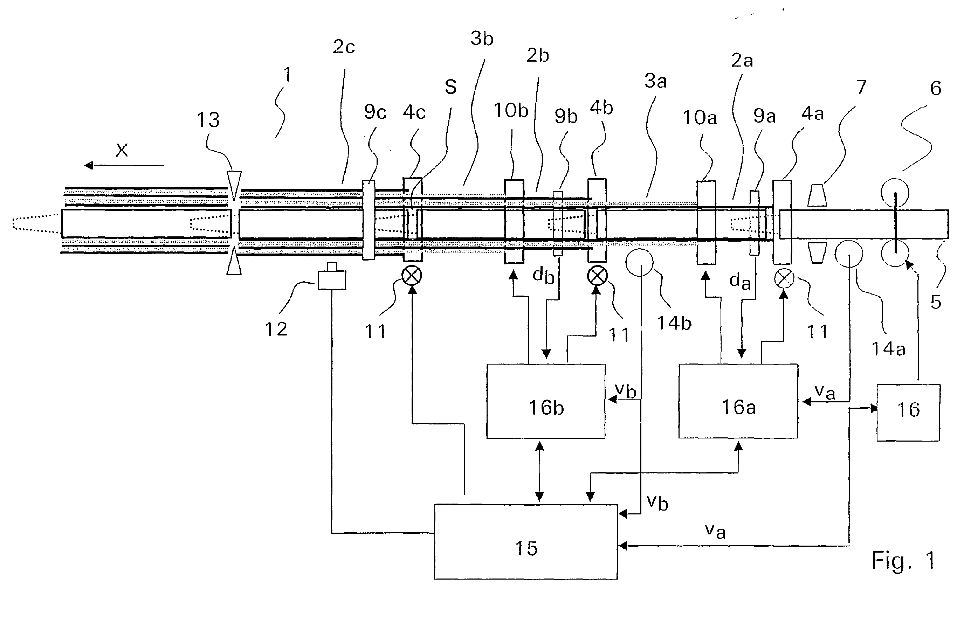

Die Figur 1 lässt eine erfindungsgemäße Einrichtung zur kontinuierlichen Herstellung von festigkeitsträgerverstärkten, schlauchförmigen Gebilden 1 als schematisches Blockdiagramm erkennen. Die Gebilde 1 werden aus mehreren übereinanderliegenden Kautschukschichten 2a, 2b, 2c und Festigkeitsträgerschichten 3a, 3b gebildet. Die Festigkeitsträgerschichten 3a, 3b sind Fadenlagen, die in einem definierten Fadenwinkel um den Umfang der jeweiligen Kautschukschicht 2a, 2b gewickelt sind.

Die Fertigungseinrichtung hat einen ersten Extruder 4a zum Auftragen der ersten Kautschukschicht 2a auf den Umfang von rohrförmigen starren Dornen 5, die fortlaufend aneinander gekoppelt sind und mit einer Vorschubfördereinrichtung 6 in Richtung einer Vorschubachse X vorgetrieben werden.

Mit einer ersten Extrusionseinheit 4a wird eine erste Kautschukschicht auf den Umfang der Dorne 5 aufgetragen. Damit die erste Kautschukschicht 2a nicht mit den Dornen 5 verklebt und später leicht abgelöst werden kann, wird mit einer Trennmittel-Auftragseinheit 7, die vor der ersten Extrusionseinheit 4a angeordnet ist, ein Trennmittel auf die Oberfläche der Dornen 5 aufgetragen.

In Richtung der Vorschubachse X gesehen hinter der ersten Extrusionseinheit 4a sind erste Schichtdicken-Messmittel 9a vorgesehen, um die Dicke der ersten Kautschukschicht 2a kontinuierlich zu messen. Die Schichtdicken-Messmittel 9a haben optische Messeinheiten, mit denen Außenkanten der ersten Kautschukschicht 2a des Gebildes 1 an mehreren Positionen am Umfang des Gebildes 1 mit einer Durchleuchtungsmessung optisch vermessen werden. Weiterhin ist mindestens ein berührungsloser Messsensor in den Schichtdicken-Messmitteln 9 vorgesehen, um die Außenkante der Dorne 5 zu erfassen. Aus der Differenz zwischen der Außenkante der Dorne 5 und den Außenkanten der ersten Kautschukschicht 2a kann die Dicke dₐ der ersten Kautschukschicht 2a berechnet werden.

In Richtung der Vorschubachse X gesehen hinter den Schichtdicken-Messmitteln 9a ist eine ersten Spulengattereinheit 10a angeordnet, um eine ersten Fadenlage mit definierten Soll-Fadenwinkeln α₁ auf die erste Kautschukschicht 2a aufzubringen. Die erste Spulengattereinheit 10a hat hierzu Mittel, die um die vorgetriebenen Dorne 5 rotieren. Der Soll-Fadenwinkel α₁ ist quer zur Vorschubachse X gesehen als 0° und in Längsrichtung der Gebilde 1 als 90° definiert.

Mit einer zweiten Extrusionseinheit 4b wird eine zweite Kautschukschicht 2b auf die erste Festigkeitsträgerschicht 3a aufgetragen und es wird optional mit zweiten Schichtdickenmessmitteln 9b die Dicke d_{b} des schlauchförmigen Gebildes 1 gemessen.

Anschließend wird mit einer zweiten Spulengattereinheit 10b, die gegensinnig zu der ersten Spulengattereinheit 10a rotiert, eine zweite Festigkeitsträgerschicht 3b als Fadenlage mit definierten Soll-Fadenwinkeln α₂ aufgebracht.

Auf diese zweite Festigkeitsträgerschicht 3b wird abschließend mit einer dritten Extrusionseinheit 4c eine dritte Kautschukschicht 2c aufgebracht.

Die Extrusionseinheiten 4a, 4b und 4c haben jeweils eine Zahnradpumpe 11, die zwischen dem Extruder und dem Extrusionskopf der Extrusionseinheit 4 angeordnet ist. Mit Hilfe der Zahnradpumpen 11 kann der Kautschukmassenstrom volumenabhängig gesteuert werden und auf diese Weise die Dicke der aufgetragenen Kautschukschicht 2 hochgenau geregelt werden. Die Regelung erfolgt in Abhängigkeit von der gemessenen Dorn-Vorschubgeschwindigkeit und optional in Abhängigkeit von der hinter einer Extrusionseinheit 4 jeweils gemessenen mittleren Dicke d der Kautschukschicht 2.

Bei dem Aufbringen der Kautschuk- und Festigkeitsträgerschichten 2, 3 werden Prozeßgrößen, wie die Dicke d der Kautschukschichten 2 gemessen und auf diese Weise die kontinuierliche Produktion der festigkeitsträgerverstärkten, schlauchförmigen Gebilde 1 überwacht. Mit einer Fadenüberwachung kann ein Fadenriss während der Produktion festgestellt und ein Alarm erzeugt werden. Die Fehlerkennzeichnung kann dann das festigkeitsträgerverstärkte, schlauchförmige Gebilde 1 als fehlerhaft kennzeichnen bzw. die Produktionslinie herunterfahren, um den Fehler zu beheben. Weiterhin kann eine Fadenkraftmessung vorgesehen sein, um die Kräfte der auf das Gebilde 1 auflaufenden einzelnen Fäden zu messen und bei Überschreitung festgelegter Toleranzen ein Alarmsignal an eine Fehlermarkierungseinheit 12 abzugeben, um das fehlerhafte Produkt auszuschleusen.

Anschließend werden die Gebilde 1 mit einer Schneideeinheit 13 in Abschnitte aufgetrennt. Hierzu ist jeweils ein umlaufender Spalt S an den Stossflächen aufeinanderfolgender Dorne 5 vorgesehen, so dass ein umlaufendes Trennmesser im Bereich des Spalts auf das festigkeitsträgerverstärkte, schlauchförmige Gebilde 1 wirken kann, ohne dass die Dorne 5 oder das Trennmesser beschädigt werden. Die Dorne 5 mit den Abschnitten der schlauchförmigen Gebilde 1 werden anschließend vereinzelt und die Gebilde 1 von den Dornen 5 abgezogen, auf Vulkanisationslänge abgelängt und vulkanisiert.

Die Vortriebsgeschwindigkeit v der Dorne 5 während des Produktionsprozesses wird mit mindestens einem Vortriebsgeschwindigkeits-Meßmittel 14a, 14b kontinuierlich gemessen und als Prozeßgröße einer zentralen Steuer- und Regelungseinheit 15 zugeführt. Diese dient auch zur Ansteuerung der Fehlermarkierungseinheit 12. Mit der zentralen Steuer- und Regelungseinheit 15, können alle ggf. optional weiteren Extrusionseinheiten 4c und Spulengattereinheiten 10b direkt angesteuert werden.

In dem dargestellten Ausführungsbeispiel ist jedoch jeweils für die erste Extrusionseinheit 4a und die erste Spulengattereinheit 10a sowie für die zweite Extrusionseinheit 4b und die zweite Spulengattereinheit 10b ein eigener Regelkreis mit den Regelungseinheiten 16a, 16b vorgesehen, um die Extrusionseinheiten 4a, 4b und die Spulengattereinheiten 10a, 10b in Abhängigkeit von der gemessenen Vorschubgeschwindigkeit v und/oder der gemessenen Dicke d der Schichten des Gebildes 1 zu regeln.

Erfindungsgemäß ist insbesondere der Regelkreis mit der Regelungseinheit 16a vorgesehen, um die durch die erste Extrusionseinheit 4a aufgebrachte Kautschukmenge in Abhängigkeit von der gemessenen Vorschubgeschwindigkeit vₐ und der gemessenen Dicke dₐ der ersten Kautschukschicht 2a so zu regeln, dass eine definierte Soll-Dicke dₛₒₗₗ der ersten Kautschukschicht 2a gewährleistet ist.

Ferner wird die Drehzahl der ersten Spulengattereinheit 10a bei der Rotation um die Dorne 5 in Abhängigkeit von der Vorschubgeschwindigkeit vₐ in Richtung der Vorschubachse X und der gemessenen Dicke dₐ der ersten Kautschukschicht 2a so geregelt, dass die aufspiralisierte Fadenlage einen definierten Soll-Fadenwinkel α₁ hat.

Mit dem zweiten Regelkreis und der Regelungseinheit 16b kann optional die zweite Extrusionseinheit 4b und die zweite Spulengattereinheit 10b geregelt werden. Hierzu wird die Dicke d_{b} des Gebildes 1 mit der zweiten Kautschukschicht 2b als Abschlussschicht mit den Schichtdicken-Messmitteln 9b gemessen.

Die Regelkreise mit den Regelungseinheiten 16a und 16b können zusätzlich zur Steuerung der Extrusions- und Spulengattereinheiten 4, 10 ausgebildet sein. Vorteilhafterweise wird die Steuerung jedoch durch die zentrale Steuerungs- und Regelungseinheit 15 vorgenommen.

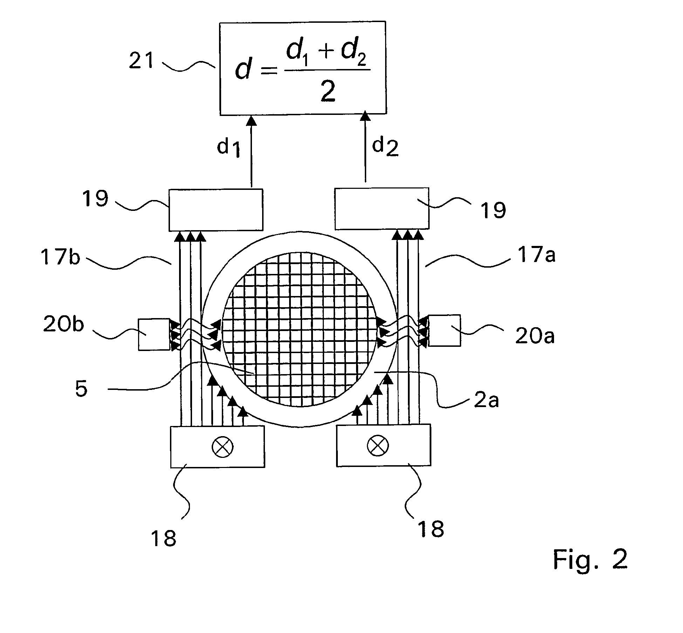

Die Figur 2 lässt eine Skizze der Schichtdicken-Messmittel 9a mit einem Dorn 5 und der ersten Kautschukschicht 2a im Querschnitt erkennen.

Die Schichtdicken-Messmittel 9a weisen mindestens zwei optische Messeinheiten 17a und 17b mit jeweils einem Leuchtmittel 18 und einem sich quer zur Längsachse des Dorns 5 erstreckenden Lichtsensor 19 auf. Die Leuchtmittel 18 sind so angeordnet, dass der mit der ersten Kautschukschicht 2a beschichtete Dorn 5 angestrahlt wird. Die Lichtsensoren 19 sind gegenüberliegend von den Leuchtmitteln 18 so angeordnet, dass nur die außerhalb von der Außenkante der ersten Kautschukschicht 2a von den Leuchtmitteln 18 in Richtung des Lichtsensors 19 geleiteten Lichtstrahlen empfangen werden und als Maß für die Position der Außenkante in Bezug auf einen Bezugspunkt, wie zum Beispiel die Mittelachse des Dorns 5, ausgewertet werden.

Ferner sind berührungslose, vorzugsweise induktive Messsensoren 20a, 20b vorgesehen, um die Außenkante des Dorns 5 zu erfassen. Auf diese Weise kann in Verbindung mit einem Bezugspunkt der Durchmesser des Dorns 5 bestimmt werden. Mit Hilfe des Bezugspunktes, der ermittelten Außenkanten der Gebilcde 1 und der Außenkante des Dorns 5, kann die Dicke dₐ der ersten Kautschukschicht 2a an den verschiedenen Positionen bestimmt werden, die durch die Lage der optischen Meßeinheiten 17a, 17b definiert sind.

Mit einer Recheneinheit 21 wird der Mittelwert der an den verschiedenen Positionen bestimmten Dicken d1, d2 der ersten Kautschukschicht 2a berechnet und als Schichtdicke d an den Regelkreis mit der Regelungseinheit 16a und/oder die zentrale Steuer- und Regelungseinheit 15 weitergeleitet.

Die weiteren Schichtdicken-Messmittel 9b, 9c, die hinter der zweiten und den weiteren Extrusionseinheit 4b, 4c angeordnet sind, können in entsprechender Weise aufgebaut und an den Regelkreis mit der Regelungseinheit 16b angeschlossen sein.

## Patentansprüche

1. Verfahren zur Herstellung von festigkeitsträgerverstärkten, schlauchförmigen Gebilden (1) aus Kautschuk- und Festigkeitsträgerschichten (2, 3) mit den Schritten:
a) Aufbringen einer ersten Kautschukschicht (2a) mit einer ersten Extru-sionseinheit (4a) auf eine Reihe aufeinanderfolgender miteinander gekoppelter starrer zylindrischer Dorne (5), die mit einer Vorschubgeschwindigkeit (v) in Richtung einer Vorschubachse (X) vorgetrieben werden;
b) Aufbringen einer ersten Fadenlage mit definierten Soll-Fadenwinkeln (α₁) bezogen auf die Vorschubachse (X) mit einer Spulengattereinheit (10a), die um die vorgetriebenen Dorne (5) rotierende Mittel hat;
c) Aufbringen mindestens einer weiteren Kautschukschicht (2b) mit mindestens einer weiteren Extrusionseinheit (4b) auf die erste Fadenlage;
**gekennzeichnet durch**
d) kontinuierliches Messen der Vortriebsgeschwindigkeit (v) der Dorne (5);
e) Regeln der **durch** die erste Extrusionseinheit (4a) aufgebrachten Kautschukmenge in Abhängigkeit von der gemessenen Vorschubgeschwindigkeit (v), um eine definierte Soll-Dicke der ersten Kautschukschicht (2a) zu erhalten;
f) Regeln der Drehzahl der ersten Spulengattereinheit (10a) bei der Rotation um die Dorne (5) in Abhängigkeit von der Vorschubgeschwindigkeit (v), um eine Fadenlage mit den definierten Soll-Fadenwinkeln (α₁) zu erhalten.

2. Verfahren nach Anspruch 1, **gekennzeichnet durch** fortlaufendes Messen der Dicke (dₐ) der ersten Kautschukschicht (2a) und Regeln der **durch** die erste Extrusionseinheit (4a) aufgebrachten Kautschukmenge in Abhängigkeit von der gemessenen Dicke (dₐ).

3. Verfahren nach Anspruch 1 oder 2, **gekennzeichnet durch** Regeln der Drehzahl der ersten Spulengattereinheit (10a) im Schritt f) in Abhängigkeit von der gemessenen Dicke (dₐ) der ersten Kautschukschicht (2a).

4. Verfahren nach einem der Ansprüche 1 bis 3, **gekennzeichnet durch** Regeln der **durch** die weiteren Extrusionseinheiten (4) aufgebrachten Kautschukmengen in Abhängigkeit von der Vorschubgeschwindigkeit (v), um eine definierte Soll-Dicke der weiteren Kautschukschichten (2) zu erhalten.

5. Verfahren nach einem der vorhergehenden Ansprüche, **gekennzeichnet durch** Regeln der Dorn-Vorschubgeschwindigkeit nach der gemessenen Vorschubgeschwindigkeit (v).

6. Verfahren nach einem der vorhergehenden Ansprüche mit den weiteren Schritten:
- Aufbringen mindestens einer weiteren Fadenlage auf eine jeweilige Kautschukschicht (2) mit definierten Soll-Fadenwinkeln (α₂) bezogen auf die Vorschubachse (X) jeweils mit einer weiteren Spulengattereinheit (10b), das um die vorgetriebenen Dorne (5) rotiert;
- Aufbringen mindestens einer weiteren Kautschukschicht (2c) auf jeweils eine Fadenlage mit jeweils einer Extrusionseinheit (4c);
**gekennzeichnet durch**
- Regeln der Drehzahlen der weiteren Spulengattereinheiten (10) bei der Rotation um die Dorne (5) in Abhängigkeit von der Vorschubgeschwindigkeit (v) und/oder von der Drehzahl der ersten Spulengattereinheit (10a), und
- Steuern der Drehzahl der weiteren Spulengattereinheiten (10) in Abhängigkeit von einer Soll-Dicke der weiteren Kautschukschichten (2) und der Soll-Fadenwinkel (α₂), wobei die Spulengattereinheiten über eine Totzeit und Koppelfaktoren miteinander gekoppelt sind.

7. Verfahren nach einem der vorhergehenden Ansprüche, **gekennzeichnet durch** variable Einstellung der Fadenwinkel (d) **durch** Steuerung der Drehzahlen der Spulengattereinheiten (10), wobei die Spulengattereinheiten (10) über eine Totzeit und Koppelfaktoren derart miteinander gekoppelt sind, dass eine Änderung des Fadenwinkels einer Fadenlage **durch** eine Spulengattereinheit an einer Position des festigkeitsträgerverstärkten, schlauchförmigen Gebildes mit einer entsprechenden Änderung des Fadenwinkels weiterer Fadenlagen an derselben Position **durch** weitere Spulengattereinheiten gekoppelt ist.

8. Verfahren nach einem der vorhergehenden Ansprüche, **gekennzeichnet durch** Regeln der **durch** die Extrusionseinheiten (4) aufgebrachten Kautschukmengen in Abhängigkeit von der gemessenen mittleren Wanddicke.

9. Verfahren nach einem der vorhergehenden Ansprüche, **gekennzeichnet durch** Regeln der **durch** eine Extrusionseinheit (4) aufgebrachten Gummimenge in Abhängigkeit von dem jeweiligen Druck im Spritzkopf der entsprechenden Extrusionseinheit (4).

10. Verfahren nach einem der vorhergehenden Ansprüche, **gekennzeichnet durch** Regelung der Dicken (d) der aufgebrachten Kautschukschichten (2a, 2b, 2c) **durch** Drehzahlregelung einer Zahnradpumpe (11), die jeweils zwischen dem Extruder und dem Extrusionskopf einer Extrusionseinheit (4) angeordnet ist.

11. Verfahren nach einem der vorhergehenden Ansprüche, **gekennzeichnet durch** Messen der Dicken (d) der aufgetragenen Schichten an mehreren Positionen am Umfang des festigkeitsträgerverstärkten, schlauchförmigen Gebildes (1) zur Regelung, Fehlererkennung und/oder Fehlerkennzeichnung bei einer über eine definierte Toleranzgrenze hinausgehenden Abweichung von einem Sollwert.

12. Verfahren nach Anspruch 11, **gekennzeichnet durch** Ermitteln der Schichtdicke aus dem Mittelwert der am Umfang gemessenen Dicken (d) der aufgetragenen Schichten.

13. Verfahren nach einem der Ansprüche 11 oder 12, **gekennzeichnet durch** Rotieren einer Einrichtung zum Messen der Dicken (d) der aufgetragenen Schichten über die Zeit um den Umfang des festigkeitsträgerverstärkten, schlauchförmigen Gebildes (1) und Aufnehmen der Dicke (d) an mehreren Umfangspositionen.

14. Verfahren nach einem der Ansprüche 11 bis 13, **gekennzeichnet durch** berührungsloses Vermessen der Außenkanten des festigkeitsträgerverstärkten, schlauchförmigen Gebildes (1) und der Außenkanten des Dorns (5) und Ermitteln der Dicke des festigkeitsträgerverstärkten, schlauchförmigen Gebildes (1) aus den Positionen der Außenkanten.

15. Verfahren nach einem der vorhergehenden Ansprüche, **gekennzeichnet durch** optisches Messen der Außenkanten des festigkeitsträgerverstärkten, schlauchförmigen Gebildes (1) und induktives Messen der Außenkante des Dorns.

16. Verfahren nach einem der vorhergehenden Ansprüche, **gekennzeichnet durch** Auftragen von Trennmittel auf die Dorne (5) mit einer Trennmittel-Auftragseinheit (7) vor dem Aufbringen der ersten Kautschukschicht (2a) und Regeln der aufgetragenen Trennmittelmenge in Abhängigkeit von der Vorschubgeschwindigkeit (v) der Dorne (5).

17. Verfahren nach Anspruch 16, **gekennzeichnet durch** Auftragen von Trennmitteln auf die äußerste Kautschukschicht (2) und Regeln der aufgetragenen Trennmittelmenge in Abhängigkeit von der Vorschubgeschwindigkeit (v) der Dorne (5).

18. Verfahren nach einem der vorhergehenden Ansprüche, **gekennzeichnet durch** Messen von Prozeßgrößen bei dem Aufbringen der Kautschuk- und Festigkeitsträgerschichten (2, 3), Markieren von fehlerhaften Bereichen des festigkeitsträgerverstärkten, schlauchförmigen Gebildes (1), wenn die Prozeßgrößen ein jeweiliges Fehlertoleranzmaß über- oder unterschreiten, optisches Erkennen der markierten fehlerhaften Bereiche, und Aussondern der als fehlerhaft erkannten Abschnitte des festigkeitsträgerverstärkten, schlauchförmigen Gebildes (1).

19. Verfahren nach einem der vorhergehenden Ansprüche, **gekennzeichnet durch** Kennzeichnen von Abschnitten des festigkeitsträgerverstärkten, schlauchförmigen Gebildes (1) nach dem Aufbringen der obersten Kautschukschicht (2c) mit einer Produktkennzeichnung, insbesondere mit der Produktionszeit und/oder einer Chargennummer, wobei die Kennzeichnung eine Trennstelle und die Einbauanlage und Einbaurichtung des Gebildes (1) kennzeichnet.

20. Einrichtung zum Herstellen von festigkeitsträgerverstärkten, schlauchförmigen Gebilden (1) mit:
a) einer ersten Extrusionseinheit (4a) zum Aufbringen einer ersten Kautschukschicht (2a) auf einer Reihe aufeinanderfolgender miteinander gekoppelter starrer, zylinderförmiger Dorne (5), die mit einer Vorschubgeschwindigkeit (v) in Richtung einer Vorschubachse (X) vorgetrieben werden;
b) einer ersten Spulengattereinheit (10a), das um die vorgetriebenen Dorne (5) rotiert, zum Aufbringen einer ersten Fadenlage mit definierten Soll-Fadenwinkeln (α₁) bezogen auf die Vorschubachse (X),
c) mindestens einer weiteren Extrusionseinheit (4b) zum Aufbringen mindestens einer weiteren Kautschukschicht (2b) auf die erste Fadenlage,
**gekennzeichnet durch**
d) Vortriebsgeschwindigkeits-Messmittel (14a, 14b) zum kontinuierlichen Messen der Vortriebsgeschwindigkeit (v) der Dorne (5),
e) mindestens eine Steuer- und Regelungseinheit (15, 16) zum Ansteuern der Extrusionseinheiten (4) und der Spulengattereinheiten (10), wobei die Steuer- und Regeleinheit (15, 16) zum
- Regeln der Drehzahl der ersten Spulengattereinheit (10a) bei der Rotation um die Dorne (5) in Abhängigkeit von der Vorschubgeschwindigkeit (v), um eine Fadenlage mit den definierten Soll-Fadenwinkeln (α₁) zu erhalten,
- Regeln der **durch** die ersten Extrusionseinheit (4a) aufgebrachten Kautschukmenge in Abhängigkeit von der gemessenen Vorschubgeschwindigkeit (v), um eine definierte Soll-Dicke der ersten Kautschukschicht (2a) zu erhalten.
ausgebildet ist.

21. Einrichtung nach Anspruch 20, **gekennzeichnet durch** Schichtdicken-Messmittel (9a) zum kontinuierlichen Messen der Dicke (dₐ) der ersten Kautschukschicht (2a) und Regeln der **durch** die ersten Extrusionseinheit (4a) aufgebrachten Kautschukmenge in Abhängigkeit von der gemessenen mittleren Dicke (dₐ).

22. Einrichtung nach Anspruch 20 oder 21, **gekennzeichnet durch** weitere Schichtdicken-Messmittel (9b, 9c) hinter den weiteren Extrusionseinheiten (4b, 4c) zum kontinuierlichen Messen der Dicke (d) der jeweiligen Kautschukschicht (2) und Regeln der **durch** die zugeordnete Extrusionseinheit (4b, 4c) aufgebrachten Kautschukmenge in Abhängigkeit von der jeweils gemessenen mittleren Dicke (d).

23. Einrichtung nach einem der Ansprüche 20 bis 22, **dadurch gekennzeichnet, dass** die Steuer- und Regeleinheit (15, 16) weiterhin zum Regeln der durch die weiteren Extrusionseinheiten (4) aufgebrachten Kautschukmengen in Abhängigkeit von der Vorschubgeschwindigkeit (v) ausgebildet ist, um eine definierte Soll-Dicke der weiteren Kautschukschichten (2b) zu erhalten.

24. Einrichtung nach einem der Ansprüche 20 bis 23, **dadurch gekennzeichnet, dass** die Steuer- und Regeleinheit (15, 16) zum Regeln der Dorn-Vorschubgeschwindigkeit nach der gemessenen Vorschubgeschwindigkeit (v) ausgebildet ist.

25. Einrichtung nach einem der Ansprüche 20 bis 24, **gekennzeichnet durch**
- mindestens eine weitere Spulengattereinheit (10) zum Aufbringen einer weiteren Fadenlage auf die jeweilige Kautschukschicht (2b) mit definierten Soll-Fadenwinkeln (α₂) bezogen auf die Vorschubachse (X), und
- mindestens eine weitere Extrusionseinheit (4) zum Aufbringen weiterer Kautschukschichten (2) auf die jeweilige Fadenlage.

26. Einrichtung nach einem der Ansprüche 20 bis 25, **gekennzeichnet durch** mindestens eine weitere Steuer- und Regelungseinheit (15, 16), die zum
- Steuern der Drehzahl der weiteren Spulengattereinheiten (10) in Abhängigkeit von einer Soll-Dicke der jeweiligen Kautschukschichten (2) und der jeweiligen Soll-Fadenwinkel (α₂),
- Regeln der Drehzahl der weiteren Spulengattereinheiten (10) bei der Rotation um die Dorne (5) in Abhängigkeit von der Vorschubgeschwindigkeit (v), und
- Regeln der **durch** die weiteren Extrusionseinheiten (4) aufgebrachten Kautschukmenge in Abhängigkeit von der gemessenen Vorschubgeschwindigkeit (v) der Dorne (5)
ausgebildet ist.

27. Einrichtung nach einem der Ansprüche 20 bis 26, **gekennzeichnet durch** jeweils eine Zahnradpumpe (11) zwischen einem Extruder und einem Extrusionskopf einer Extrusionseinheit (4) zur Regelung der Dicke der aufgebrachten Kautschukschichten (2), wobei die Regelung über eine Drehzahländerung der Zahnradpumpe (11) erfolgt.

28. Einrichtung nach einem der Ansprüche 20 bis 27, **dadurch gekennzeichnet, dass** die Schichtdickenmessmittel (9) Messeinheiten zur Vermessung der Außenkanten des festigkeitsträgerverstärkten, schlauchförmigen Gebildes (1) an mehreren Positionen am Umfang des festigkeitsträgerverstärkten, schlauchförmigen Gebildes (1) und mindestens einen berührungslosen Messsensor zur Erfassung der Außenkanten des Dorns (5) haben.

29. Einrichtung nach Anspruch 28, **dadurch gekennzeichnet, dass** die Schichtdickenmessmittel (9) zur Aufnahme der Aussenkanten an mehreren Positionen am Umfang des festigkeitsträgerverstärkten, schlauchförmigen Gebildes (1) rotierbar um das festigkeitsträgerverstärkte, schlauchförmige Gebilde (1) sind.

30. Einrichtung nach Anspruch 28 oder 29, **gekennzeichnet durch** Rechenmittel, die an die Schichtdickenmessmittel (9) angeschlossen sind und zur Ermittlung der Dicke des festigkeitsträgerverstärkten, schlauchförmigen Gebildes (1) aus dem Mittelwert der bestimmten Dicken an mehrern Umfangspositionen des festigkeitsträgerverstärkten, schlauchförmigen Gebildes (1) ausgebildet sind.

31. Einrichtung nach einem der Ansprüche 28 bis 30, **dadurch gekennzeichnet, dass** mindestens ein Messsensor für die Außenkanten des Dorns ein induktiver Sensor ist.

## Claims

1. Method for the production of tubular structures (1) that are reinforced with a strengthening support, comprising rubber and strengthening support layers (2, 3), with the steps of:
a) applying a first rubber layer (2a) by a first extrusion unit (4a) to a series of successive rigid cylindrical mandrels (5) that are coupled to one another and are driven at a rate of advancement (v) in the direction of an axis of advancement (X);
b) applying a first filament layer at defined setpoint filament angles (α₁) with respect to the axis of advancement (X) by a bobbin creel unit (10a), which has means rotating about the driven mandrels (5);
c) applying at least one further rubber layer (2b) by at least one further extrusion unit (4b) to the first filament layer;
**characterized by**
d) continuously measuring the rate of advancement (v) of the mandrels (5);
e) regulating the amount of rubber applied by the first extrusion unit (4a) in dependence on the measured rate of advancement (v), in order to obtain a defined setpoint thickness of the first rubber layer (2a) ;
f) regulating the rotational speed of the first bobbin creel unit (10a) during the rotation about the mandrels (5) in dependence on the rate of advancement (v), in order to obtain a filament layer with the defined setpoint filament angles (α₁).

2. Method according to Claim 1, **characterized by** continuously measuring the thickness (dₐ) of the first rubber layer (2a) and regulating the amount of rubber applied by the first extrusion unit (4a) in dependence on the measured thickness (dₐ).

3. Method according to Claim 1 or 2, **characterized by** regulating the rotational speed of the first bobbin creel unit (10a) in step f) in dependence on the measured thickness (dₐ) of the first rubber layer (2a).

4. Method according to one of Claims 1 to 3, **characterized by** regulating the amounts of rubber applied by the further extrusion units (4) in dependence on the rate of advancement (v), in order to obtain a defined setpoint thickness of the further rubber layers (2).

5. Method according to one of the preceding claims, **characterized by** regulating the rate of mandrel advancement on the basis of the measured rate of advancement (v).

6. Method according to one of the preceding claims with the further steps of:
- applying at least one further filament layer to a respective rubber layer (2) at defined setpoint filament angles (α₂) with respect to the axis of advancement (X) in each case by a further bobbin creel unit (10b), which rotates about the driven mandrels (5);
- applying at least one further rubber layer (2c) to in each case a filament layer by in each case an extrusion unit (4c);
**characterized by**
- regulating the rotational speeds of the further bobbin creel units (10) during the rotation about the mandrels (5) in dependence on the rate of advancement (v) and/or on the rotational speed of the first bobbin creel unit (10a), and
- controlling the rotational speed of the further bobbin creel units (10) in dependence on a setpoint thickness of the further rubber layers (2) and the setpoint filament angles (α₂), the bobbin creel units being coupled to one another by means of a dead time and coupling factors.

7. Method according to one of the preceding claims, **characterized by** variable setting of the filament angles (d) by controlling the rotational speeds of the bobbin creel units (10), the bobbin creel units (10) being coupled to one another by means of a dead time and coupling factors in such a way that a change of the filament angle of one filament layer by one bobbin creel unit at one position of the tubular structure that is reinforced with a strengthening support is coupled with a corresponding change of the filament angle of further filament layers at the same position by further bobbin creel units.

8. Method according to one of the preceding claims, **characterized by** regulating the amounts of rubber applied by the extrusion units (4) in dependence on the measured average wall thickness.

9. Method according to one of the preceding claims, **characterized by** regulating the amount of rubber applied by an extrusion unit (4) in dependence on the respective pressure in the die head of the corresponding extrusion unit (4).

10. Method according to one of the preceding claims, **characterized by** regulating the thicknesses (d) of the applied rubber layers (2a, 2b, 2c) by regulating the rotational speed of a gear pump (11), which is respectively arranged between the extruder and the extrusion head of an extrusion unit (4).

11. Method according to one of the preceding claims, **characterized by** measuring the thicknesses (d) of the applied layers at a number of positions on the circumference of the tubular structure (1) that is reinforced with a strengthening support for regulating, detecting errors and/or identifying errors when there is a deviation from a setpoint value that goes beyond a defined tolerance limit.

12. Method according to Claim 11, **characterized by** ascertaining the layer thickness from the mean value of the thicknesses (d), measured at the circumference, of the layers applied.

13. Method according to either of Claims 11 and 12, **characterized by** rotating a device for measuring the thicknesses (d) of the applied layers over time around the circumference of the tubular structure (1) that is reinforced with a strengthening support and recording the thickness (d) at a number of circumferential positions.

14. Method according to one of Claims 11 to 13, **characterized by** contactlessly measuring the outer edges of the tubular structure (1) that is reinforced with a strengthening support and the outer edges of the mandrel (5) and ascertaining the thickness of the tubular structure (1) that is reinforced with a strengthening support from the positions of the outer edges.

15. Method according to one of the preceding claims, **characterized by** optically measuring the outer edges of the tubular structure (1) that is reinforced with a strengthening support and inductively measuring the outer edge of the mandrel.

16. Method according to one of the preceding claims, **characterized by** applying release agent to the mandrels (5) by a release agent application unit (7) before applying the first rubber layer (2a) and regulating the applied amount of release agent in dependence on the rate of advancement (v) of the mandrels (5).

17. Method according to Claim 16, **characterized by** applying release agents to the outermost rubber layer (2) and regulating the applied amount of release agent in dependence on the rate of advancement (v) of the mandrels (5).

18. Method according to one of the preceding claims, **characterized by** measuring process variables during the application of the rubber and strengthening support layers (2, 3), marking defective regions of the tubular structure (1) that is reinforced with a strengthening support if the process variables go above or below a respective degree of error tolerance, optically detecting the marked defective regions, and segregating the portions detected as defective of the tubular structure (1) that is reinforced with a strengthening support.

19. Method according to one of the preceding claims, **characterized by** identifying portions of the tubular structure (1) that is reinforced with a strengthening support after the application of the uppermost rubber layer (2c) by a product identification, in particular by the production time and/or a batch number, the identification identifying a separating point and the installation position and installation direction of the structure (1).

20. Device for the production of tubular structures (1) that are reinforced with a strengthening support, comprising:
a) a first extrusion unit (4a) for applying a first rubber layer (2a) to a series of successive rigid cylindrical mandrels (5) that are coupled to one another and are driven at a rate of advancement (v) in the direction of an axis of advancement (X),
b) a first bobbin creel unit (10a), which rotates about the driven mandrels (5), for applying a first filament layer at defined setpoint filament angles (α₁) with respect to the axis of advancement (X),
c) at least one further extrusion unit (4b) for applying at least one further rubber layer (2b) to the first filament layer,
**characterized by**
d) rate of advancement measuring means (14a, 14b) for continuously measuring the rate of advancement (v) of the mandrels (5),
e) at least one controlling and regulating unit (15, 16) for activating the extrusion units (4) and the bobbin creel units (10), the controlling and regulating unit (15, 16) being designed for
- regulating the rotational speed of the first bobbin creel unit (10a) during the rotation about the mandrels (5) in dependence on the rate of advancement (v), in order to obtain a filament layer at the defined setpoint filament angles (α₁), and
- regulating the amount of rubber applied by the first extrusion unit (4a) in dependence on the measured rate of advancement (v), in order to obtain a defined setpoint thickness of the first rubber layer (2a).

21. Device according to Claim 20, **characterized by** layer thickness measuring means (9a) for continuously measuring the thickness (dₐ) of the first rubber layer (2a) and regulating the amount of rubber applied by the first extrusion unit (4a) in dependence on the measured average thickness (dₐ).

22. Device according to Claim 20 or 21, **characterized by** further layer thickness measuring means (9b, 9c) downstream of the further extrusion units (4b, 4c) for continuously measuring the thickness (d) of the respective rubber layer (2) and regulating the amount of rubber applied by the assigned extrusion unit (4b, 4c) in dependence on the respectively measured average thickness (d).

23. Device according to one of Claims 20 to 22, **characterized in that** the controlling and regulating unit (15, 16) is designed furthermore for regulating the amounts of rubber applied by the further extrusion units (4) in dependence on the rate of advancement (v), in order to obtain a defined setpoint thickness of the further rubber layers (2b).

24. Device according to one of Claims 20 to 23, **characterized in that** the controlling and regulating unit (15, 16) is designed for regulating the rate of mandrel advancement on the basis of the measured rate of advancement (v).

25. Device according to one of Claims 20 to 24, **characterized by**
- at least one further bobbin creel unit (10) for applying a further filament layer to the respective rubber layer (2b) at defined setpoint filament angles (α₂) in relation to the axis of advancement (X), and
- at least one further extrusion unit (4) for applying further rubber layers (2) to the respective filament layer.

26. Device according to one of Claims 20 to 25, **characterized by** at least one further controlling and regulating unit (15, 16), which is designed for
- controlling the rotational speed of the further bobbin creel units (10) in dependence on a setpoint thickness of the respective rubber layers (2) and the respective setpoint filament angles (α₂),
- regulating the rotational speed of the further bobbin creel units (10) during the rotation about the mandrels (5) in dependence on the rate of advancement (v), and
- regulating the amount of rubber applied by the further extrusion units (4) in dependence on the measured rate of advancement (v) of the mandrels (5).

27. Device according to one of Claims 20 to 26, **characterized by** a gear pump (11) in each case between an extruder and an extrusion head of an extrusion unit (4) for regulating the thickness of the applied rubber layers (2), the regulation taking place by means of a change in the rotational speed of the gear pump (11).

28. Device according to one of Claims 20 to 27, **characterized in that** the layer thickness measuring means (9) have measuring units for measuring the outer edges of the tubular structure (1) that is reinforced with a strengthening support at a number of positions on the circumference of the tubular structure (1) that is reinforced with a strengthening support and at least one contactless measuring sensor for sensing the outer edges of the mandrel (5).

29. Device according to Claim 28, **characterized in that** the layer thickness measuring means (9) for recording the outer edges at a number of positions on the circumference of the tubular structure (1) that is reinforced with a strengthening support are rotatable about the tubular structure (1) that is reinforced with a strengthening support.

30. Device according to Claim 28 or 29, **characterized by** computing means which are connected to the layer thickness measuring means (9) and are designed for ascertaining the thickness of the tubular structure (1) that is reinforced with a strengthening support from the mean value of the determined thicknesses at a number of circumferential positions of the tubular structure (1) that is reinforced with a strengthening support.

31. Device according to one of Claims 28 to 30, **characterized in that** at least one measuring sensor for the outer edges of the mandrel is an inductive sensor.

## Revendications

1. Procédé de fabrication de produit (1) en forme de tuyau flexible, renforcé par des renforts, constitué de couches de caoutchouc et de couches de renfort (2, 3), lequel procédé présente les étapes qui consistent à :
a) appliquer une première couche de caoutchouc (2a) à l'aide d'une première unité d'extrusion (4a) sur une série de mandrins cylindriques rigides (5) successifs et accouplés les uns aux autres, qui sont avancés à une vitesse d'avancement (v) dans la direction d'un axe d'avancement (X),
b) appliquer une première couche de fils à un angle de consigne défini (α₁) des fils par rapport à l'axe d'avancement (X) à l'aide d'une unité (10a) à grille de bobines qui présente des moyens qui tournent autour des mandrins (5) entraînés vers l'avant,
c) appliquer au moins une autre couche de caoutchouc (2b) à l'aide d'au moins une autre unité d'extrusion (4b) sur la première couche de fils,
**caractérisé par** les étapes qui consistent à :
d) mesurer en continu la vitesse d'avancement (v) des mandrins (5),
e) réguler la quantité de caoutchouc appliquée par la première unité d'extrusion (4a) en fonction de la vitesse d'avancement (v) mesurée, de manière à obtenir une première couche de caoutchouc (2a) d'épaisseur nominale définie,
f) réguler la vitesse de rotation de la première unité (10a) à grille de bobines lors de sa rotation autour des mandrins (5) en fonction de la vitesse d'avancement (v), de manière à obtenir une couche de fils qui présente un angle de consigne défini (α₁) des fils.

2. Procédé selon la revendication 1, **caractérisé par** la mesure permanente de l'épaisseur (dₐ) de la première couche de caoutchouc (2a) et la régulation de la quantité de caoutchouc appliquée par la première unité d'extrusion (4a) en fonction de l'épaisseur (dₐ) mesurée.

3. Procédé selon les revendications 1 ou 2, **caractérisé par** la régulation de la vitesse de rotation de la première unité (10a) à grille de bobines dans l'étape f) en fonction de l'épaisseur (dₐ) mesurée pour la première couche de caoutchouc (2a).

4. Procédé selon l'une des revendications 1 à 3, **caractérisé par** la régulation des quantités de caoutchouc appliquées par les autres unités d'extrusion (4) en fonction de la vitesse d'avancement (v), de manière à obtenir des autres couches de caoutchouc (2) d'épaisseur nominale définie.

5. Procédé selon l'une des revendications précédentes, **caractérisé par** la régulation de la vitesse d'avancement des mandrins en fonction de la vitesse d'avancement (v) mesurée.

6. Procédé selon l'une des revendications précédentes, qui présente les étapes supplémentaires qui consistent à :
- à l'aide d'une autre unité (10b) à grille de bobines qui tourne autour des mandrins (5) entraînés vers l'avant, appliquer au moins une autre couche de fils sur une couche de caoutchouc (2), avec un angle de consigne défini (α₂) des fils par rapport à l'axe d'avancement (X),
- à l'aide d'une unité d'extrusion (4c) respective, appliquer au moins une autre couche de caoutchouc (2c) sur une couche de fils, et **caractérisé par** les étapes qui consistent à :
- réguler la vitesse de rotation des autres unités (10) à grille de bobines lors de leur rotation autour des mandrins (5) en fonction de la vitesse d'avancement (v) et/ou de la vitesse de rotation de la première unité (10a) à grille de bobines et
- contrôler la vitesse de rotation des autres unités (10) à grille de bobines en fonction de l'épaisseur de consigne des autres couches de caoutchouc (2) et de l'angle de consigne (α₂) des fils, les unités à grille de bobines étant accouplées les unes aux autres avec un temps mort et des facteurs d'accouplement.

7. Procédé selon l'une des revendications précédentes, **caractérisé par** la modification du réglage de l'angle (d) des fils par commande de la vitesse de rotation des unités (10) à grille de bobines, les unités (10) à grille de bobines étant accouplées les unes aux autres avec un temps mort et des facteurs d'accouplement de telle sorte qu'une modification de l'angle des fils d'une couche de fils déposée par une unité à grille de bobines en une position du produit en forme de tuyau flexible renforcé par des renforts soit couplée à une modification correspondante de l'angle des fils d'autres couches de fils déposées en la même position par d'autres unités à grille de bobines.

8. Procédé selon l'une des revendications précédentes, **caractérisé par** la régulation des quantités de caoutchouc déposé par les unités d'extrusion (4) en fonction de l'épaisseur moyenne mesurée de la paroi.

9. Procédé selon l'une des revendications précédentes, **caractérisé par** la régulation des quantités de caoutchouc appliquées par une unité d'extrusion (4) en fonction de la pression qui règne dans la tête de projection de l'unité d'extrusion (4) respective.

10. Procédé selon l'une des revendications précédentes, **caractérisé par** la régulation de l'épaisseur (d) des couches de caoutchouc (2a, 2b, 2c) déposées par régulation de la vitesse de rotation d'une pompe (11) à roues dentées qui est disposée entre chaque extrudeuse et la tête d'extrusion de l'unité d'extrusion (4) respective.

11. Procédé selon l'une des revendications précédentes, **caractérisé par** la mesure de l'épaisseur (d) des couches appliquées en plusieurs positions à la périphérie du produit (1) en forme de manchon flexible renforcé par des renforts, pour réguler, détecter des défauts et/ou identifier des défauts lorsque l'écart par rapport à une valeur de consigne dépasse une limite de tolérance définie.

12. Procédé selon la revendication 11, **caractérisé par** la détermination de l'épaisseur des couches à partir de la valeur moyenne des épaisseurs (d) mesurées à la périphérie des couches appliquées.

13. Procédé selon l'une des revendications 11 ou 12, **caractérisé par** la rotation d'un dispositif de mesure de l'épaisseur (d) des couches appliquées en fonction du temps à la périphérie du produit (1) en forme de manchon flexible renforcé par des renforts, et enregistrement de l'épaisseur (d) en plusieurs positions à la périphérie.

14. Procédé selon l'une des revendications 11 à 13, **caractérisé par** la mesure sans contact du bord extérieur du produit (1) en forme de manchon flexible renforcé par des renforts, mesure par induction du bord extérieur du mandrin (5) et détermination de l'épaisseur du produit (1) en forme de manchon flexible renforcé par des renforts à partir de la position des bords extérieurs.

15. Procédé selon l'une des revendications précédentes, **caractérisé par** la mesure optique du bord extérieur du produit (1) en forme de manchon flexible renforcé par des renforts et la mesure par induction du bord extérieur du mandrin.

16. Procédé selon l'une des revendications précédentes, **caractérisé par** l'application d'agent de séparation sur les mandrins (5) à l'aide d'une unité (7) d'application d'agent de séparation, avant l'application de la première couche de caoutchouc (2a), et régulation de la quantité appliquée d'agent de séparation en fonction de la vitesse d'avancement (v) des mandrins (5).

17. Procédé selon la revendication 16, **caractérisé par** l'application d'agents de séparation sur la couche extérieure de caoutchouc (2) et régulation de la quantité appliquée d'agent de séparation en fonction de la vitesse d'avancement (v) des mandrins (5).

18. Procédé selon l'une des revendications précédentes, **caractérisé par** la mesure de grandeurs de processus lors de l'application des couches de caoutchouc et des couches de renforts (2, 3), repérage des parties défectueuses du produit (1) en forme de manchon renforcé par des renforts lorsque les grandeurs de processus dépassent par le haut ou par le bas une valeur correspondante de tolérance de défaut, détection optique des parties défectueuses repérées et enlèvement des tronçons reconnus comme défectueux du produit (1) en forme de manchon flexible renforcé par des renforts.

19. Procédé selon l'une des revendications précédentes, **caractérisé par** l'identification de tronçons du produit (1) en forme de manchon renforcé par des renforts après l'application de la couche supérieure de caoutchouc (2c), à l'aide d'une identification de produit qui reprend en particulier l'instant de production et/ou un numéro de lot, la caractérisation indiquant l'emplacement de découpes, la position de montage et la direction de montage du produit (1).

20. Dispositif de fabrication de produits (1) en forme de manchon flexible renforcé par des renforts, qui présente :
a) une première unité d'extrusion (4a) qui applique une première couche de caoutchouc (2a) sur une série de mandrins (5) successifs, de forme cylindrique, rigides, accouplés les uns aux autres et entraînés vers l'avant à une vitesse d'avancement (v) dans la direction d'un axe d'avancement (X),
b) une première unité (10a) à grille de bobines qui tourne autour des mandrins (5) entraînés vers l'avant pour appliquer une première couche de fils à un angle de consigne défini (α₁) des fils par rapport à l'axe d'avancement (X),
c) au moins une autre unité d'extrusion (4b) qui applique au moins une autre couche de caoutchouc (2b) sur la première couche de fils,
**caractérisé par**:
d) des moyens (14a, 14b) de mesure de la vitesse d'avancement, qui mesurent en continu la vitesse d'avancement (v) des mandrins (5),
e) au moins une unité de commande et de régulation (15, 16) qui commande les unités d'extrusion (4) et les unités (10) à grille de bobines, l'unité de commande et de régulation (15, 16) étant configurée pour:
- réguler la vitesse de rotation de la première unité (10a) à grille de bobines lors de sa rotation autour des mandrins (5) en fonction de la vitesse d'avancement (v), de manière à obtenir une couche de fils qui présente l'angle de consigne défini (α₁) des fils,
- réguler la quantité de caoutchouc appliquée par la première unité d'extrusion (4a) en fonction de la vitesse d'avancement (v) mesurée, de manière à obtenir une première couche de caoutchouc (2a) d'épaisseur de consigne définie.

21. Dispositif selon la revendication 20, **caractérisé par** des moyens (9a) de mesure de l'épaisseur des couches, qui mesurent en continu l'épaisseur (dₐ) de la première couche de caoutchouc (2a) et qui régulent la quantité de caoutchouc appliquée par la première unité d'extrusion (4a) en fonction de l'épaisseur moyenne (dₐ) mesurée.

22. Dispositif selon les revendications 20 ou 21, **caractérisé par** d'autres moyens (9b, 9c) de mesure de l'épaisseur des couches situés en aval des autres unités d'extrusion (4b, 4c), pour mesurer en continu l'épaisseur (d) de chaque couche de caoutchouc (2) et réguler la quantité de caoutchouc appliquée par l'unité d'extrusion (4b, 4c) respective en fonction de l'épaisseur moyenne (d) respectivement mesurée.

23. Dispositif selon l'une des revendications 20 à 22, **caractérisé en ce que** l'unité de commande et de régulation (15, 16) est en outre configurée pour réguler la quantité de caoutchouc appliquée par les autres unités d'extrusion (4) en fonction de la vitesse d'avancement (v), pour obtenir d'autres couches de caoutchouc (2b) d'épaisseur de consigne définie.

24. Dispositif selon l'une des revendications 20 à 23, **caractérisé en ce que** l'unité de commande et de régulation (15, 16) est configurée pour réguler la vitesse d'avancement des mandrins en fonction de la vitesse d'avancement (v) mesurée.

25. Dispositif selon l'une des revendications 20 à 24, **caractérisé par** :
- au moins une autre unité (10) à grille de bobines qui applique une autre couche de fils sur la couche de caoutchouc (2b) respective avec un angle de consigne défini (α₂) des fils par rapport à l'axe d'avancement (X) et
- au moins une autre unité d'extrusion (4) qui applique d'autres couches de caoutchouc (2) sur chaque couche de fils.

26. Dispositif selon l'une des revendications 20 à 25, **caractérisé par** au moins une autre unité de commande et de régulation (15, 16) qui est configurée pour :
- commander la vitesse de rotation des autres unités (10) à grille de bobines en fonction de l'épaisseur de consigne des couches de caoutchouc (2) respectives et de l'angle de consigne (α₂) respectif des fils,
- réguler la vitesse de rotation des autres unités (10) à grille de bobines lors de leur rotation autour des mandrins (5) en fonction de la vitesse d'avancement (v) et
- réguler la quantité de caoutchouc appliquée par les autres unités d'extrusion (4) en fonction de la vitesse d'avancement mesurée (v) des mandrins (5).

27. Dispositif selon l'une des revendications 20 à 26, **caractérisé par** une pompe (11) à roues dentées située entre chaque extrudeuse et la tête d'extrusion de chaque unité d'extrusion (4) pour réguler l'épaisseur des couches de caoutchouc (2) appliquées, la régulation s'effectuant par une modification de la vitesse de rotation de la pompe (11) à roues dentées.

28. Dispositif selon l'une des revendications 20 à 27, **caractérisé en ce que** les moyens (9) de mesure de l'épaisseur des couches présentent des unités de mesure qui mesurent le bord extérieur du produit (1) en forme de manchon flexible renforcé par des renforts en plusieurs positions situées à la périphérie du produit (1) en forme de manchon flexible renforcé par des renforts et au moins une sonde de mesure sans contact qui détecte le bord extérieur du mandrin (5).

29. Dispositif selon la revendications 28, **caractérisé en ce que** les moyens (9) de mesure de l'épaisseur des couches peuvent tourner autour du produit (1) en forme de manchon flexible renforcé par des renforts pour enregistrer le bord extérieur en plusieurs positions situées à la périphérie du produit (1) en forme de manchon flexible renforcé par des renforts.

30. Dispositif selon les revendications 28 ou 29, **caractérisé par** des moyens de calcul qui sont raccordés aux moyens (9) de mesure de l'épaisseur des couches et qui sont configurés pour déterminer l'épaisseur du produit (1) en forme de manchon flexible renforcé par des renforts à partir de la valeur moyenne de l'épaisseur déterminée en plusieurs positions situées à la périphérie du produit (1) en forme de manchon flexible renforcé par des renforts.

31. Dispositif selon l'une des revendications 28 à 30, **caractérisé en ce qu'**au moins une sonde de mesure du bord extérieur d'un mandrin est une sonde à induction.
